# EUROPEAN PATENT APPLICATION

(11) **EP 1 783 764 A1**
(43) Date of publication of application: **09.05.2007**
(21) Application number: 05767430.1
(22) Date of filing: 29.07.2005
(51) Int. Cl.: G11B 17/26

(54) **OPTICAL DISC DEVICE**

(30) Priority: 23.08.2004 JP 2004242033
(71) Applicant: MATSUSHITA ELECTRIC INDUSTRIAL CO., LTD., Osaka 571-8501 (JP)
(72) Inventor: HASEGAWA, K. c/oMatsushita Electric Ind. Co., Ltd., Osaka-shi Osaka 540-6319 (JP); NAKAYAMA, T. c/oMatsushita Electric Ind. Co., Ltd., Osaka-shi Osaka 540-6319 (JP); NISHIDA, H. c/oMatsushita Electric Ind. Co., Ltd., Osaka-shi Osaka 540-6319 (JP); NAKADE, I. c/oMatsushita Electric Ind. Co., Ltd., Osaka-shi Osaka 540-6319 (JP)
(74) Representative: Pautex Schneider, Nicole Véronique
(86) International application number: PCT/JP2005/013961
(87) International publication number: WO 2006/022116

(57) **Abstract**

An optical disk device capable of securing a rigidity of a tray that holds an optical disk is provided. When an optical disk 12 is put into trays 20 stacked in a main body 13, a holding portion 21 provided to the tray 20 holds the optical disk 12. In this case, since the holding portion 21 holds the optical disk 12 from the label face 12a side of the optical disk 12, a recording face 12b located on the opposite side to the label face 12a can be opened without provision of a notch in the tray 20. Accordingly, a rigidity of the tray 20 can be secured.

## Description

### Technical Field

The present invention relates to a continuous playing optical disk device having a plurality of trays into which a plurality of optical disks are put.

### Background Art

In the prior art, the continuous playing optical disk device that stores plural sheets of optical disks in a main body of the disk drive and then records/plays a desired selected optical disk has been developed (see Patent Literature 1, for example).

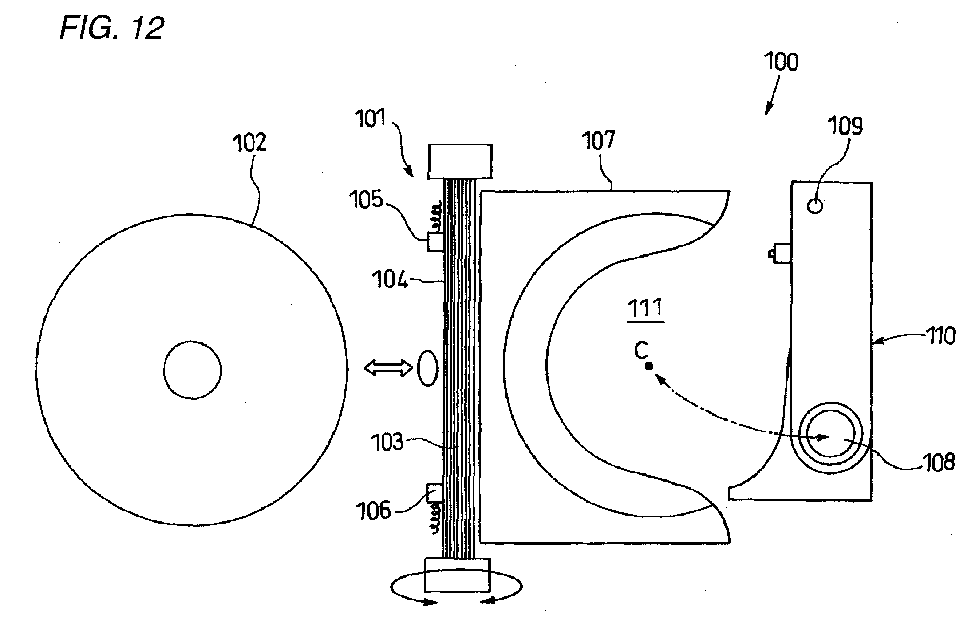

As shown in FIG.12, in an optical disk device 100, a slot 103 is provided on the front side of a main body 101. A large- diameter disk 102 with an outer diameter of 12 cm such as CD (Compact Disc), DVD (Digital Versatile Disc), or the like and a media such as a dummy disk in an annular adapter with an outer diameter of 12 cm of which a small-diameter CD with an outer diameter of 8 cm is fitted, or the like are inserted through the slots 103. A carrying roller 104 is provided rotatably on the inside of the slot 103 in the slot 103 to intersect orthogonally with the carrying direction. This carrying roller 104 carries the large-diameter disk 102, which is inserted through the slot 103 and decided as the normal disk by outer-diameter sensors 105, 106, or the like into the inside of the main body.

A plurality of trays 107 are stacked vertically in the rear of the carrying roller 104 (the right side in FIG.12). A tone arm 110 having a turntable 108 at its top end is provided in rear of the tray 107 to turn around a rotating shaft 109. This turntable 108 turns while grasping the disk 102. A pickup (not shown) is provided to the tone arm 110 to move reciprocally. After the tone arm 110 is turned and positioned in a recording/ playing position, the recording/playing operation is applied to the disk 102 while moving the pickup reciprocally.
Patent Literature 1: JP-A-2003-338112 (Fig.4)

### Disclosure of the Invention

### Problems that the Invention is to Solve

By the way, in the optical disk device 100 in the prior art, a notch 111 is provided to the tray 107 to prevent such a situation that the tone arm 110 positioned in the recording/ playing position interferes with the tray 107. Therefore, the optical disk 102 being held in the tray 107 can be held directly by the turntable 108 of the tone arm 110, and the tray 107 can be put down without interference with the tone arm 110.

However, since the notch 111 is provided to prevent the interference between the tone arm 110 and the tray 107, an outer periphery of the tray 107 is not continuously formed. Therefore, such a problem has arisen that the tray 107 lacks a rigidity and is ready to be deformed.

The present invention has been made to solve the problems in the prior art, and it is an object of the present invention to provide an optical disk device capable of securing a rigidity of a tray that holds an optical disk.

### Means for Solving the Problems

An optical disk device of the present invention, includes a main body for storing a plurality of optical disks therein; and a plurality of trays stacked to hold the plurality of optical disks respectively in an inside of the main body. Each of the trays has a holding face at label face side of the optical disk which the each of the tray holds.

According to this configuration, the tray has the tray holding face for holding the optical disk from the label face side of the optical disk when the optical disk is to be stored in the trays that are stacked in the main body. Therefore, the recording face located on the opposite side to the label face can be opened without provision of the notch in the tray, and a rigidity of the tray can be secured.

Also, the optical disk device of the present invention further includes a holding portions that are able to contact recording faces of the optical disks which are held in the trays. The optical disks are held between the trays and the holding portions.

According to this configuration, a rigidity of the tray that houses the optical disk therein can be secured, and also the optical disk can be held without fail in the disk storing state.

Also, in the optical disk device of the present invention, each of the holding portion has retaining detent which is provided to hold the each of optical disks in a thickness direction by a cooperation with the tray in a closed state and separate the optical disk from the tray in a half-opened state.

According to this configuration, the optical disk can be separated from the tray not to drop down the optical disk.

Also, the optical disk device of the present invention further includes a tray lifting portion for lifting the trays. A lifting operation of the tray lifting portion and a separating operation of the retaining detents are linked together.

According to this configuration, the opening/closing operation of the retaining detents and the vertically moving operation of the trays can be linked together. Therefore, the loading operation of the optical disk onto the turntable can be executed at a precise timing.

### Advantages of the Invention

According to the present invention, the tray for holding the optical disk is constructed to hold the optical disk from the label face side of the optical disk. Therefore, a recording face located on the opposite side to a label face can be opened not to provide the notch in the tray. As a result, the optical disk device that possesses such an advantage that a rigidity of the tray can be secured can be provided.

### Brief Description of the Drawings

[FIG.1] An overall perspective view of a car audio equipment in which an optical disk device according to an embodiment of the present invention is built.
[FIG.2] A plan view of a standby state of the optical disk device according to the embodiment of the present invention when viewed from a II-II position in FIG.1.
[FIG.3] A plan view of a recording/playing state of the optical disk device according to the embodiment of the present invention when viewed from a III-III position in FIG.1.
[FIG.4] (A) is a perspective view showing a holding portion in a holding state, and (B) is a perspective view showing the holding portion in a half-opened state.
[FIG.5] An exploded perspective view of the holding portion.
[FIG.6] A sectional view showing a state in which the trays are driven in the direction to come close mutually.
[FIG.7] A sectional view showing a state in which a work space is provided under a desired tray in the standby state.
[FIG.8] A sectional view showing a state in which a tone arm is turned to a recording/playing position in the work space.
[FIG.9] A sectional view showing a state in which a desired optical disk is loaded on a turntable by opening the holding portion.
[FIG.10] A sectional view showing the recording/playing state.
[FIG.11] (A) is a pertinent plan view showing another mode of the holding portion, (B) is a side view showing a state in which a retaining detent is closed when viewed along the B direction in (A), and (C) a side view showing a state in which the retaining detent is half opened.
[FIG.12] A plan view of an optical disk device in the prior art.

### Description of Reference Numerals and Signs

- 10: optical disk device
- 12: optical disk
- 12a: label face
- 12b: recording face
- 13: main body
- 20: tray
- 20a: disk holding face
- 21: holding portion
- 25: retaining detent

### Best Mode for carrying Out the Invention

An optical disk device according to an embodiment of the present invention will be explained with reference to the drawings hereinafter.

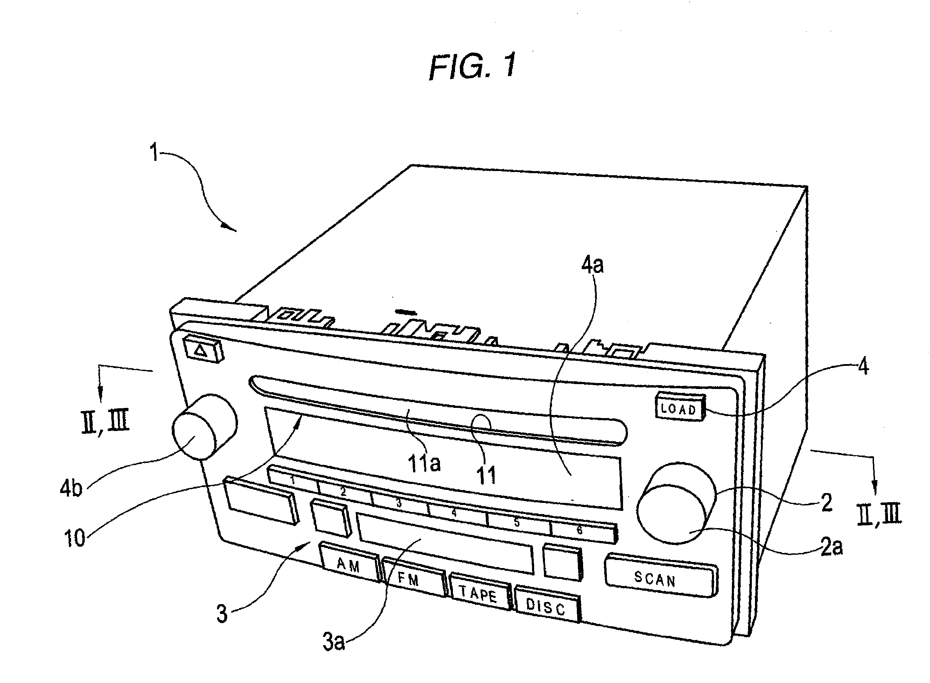

An overall perspective view of a car audio equipment 1 in which an optical disk device 10 according to an embodiment of the present invention is built is shown in FIG.1.

A radio 2, a cassette tape player 3, etc. as well as the optical disk device 10 are built in the car audio equipment 1. An optical disk slot 11 for the optical disk device 10, a radio tuning knob 2a, a cassette insertion slot 3a, and the like are provided in addition to a display portion 4a used commonly in all functions and a power/volume knob 4b. Also, a controlling portion 5 for controlling the radio 2, the cassette tape player 3, the optical disk device 10, etc. is provided in the inside.

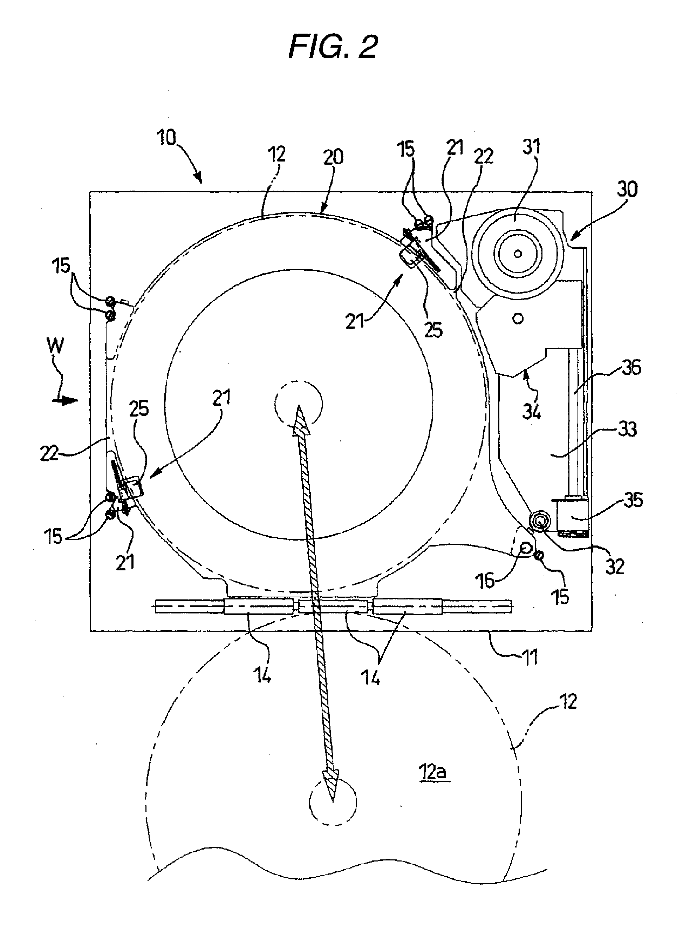

A plan view of the optical disk device 10 built in the car audio equipment 1 according to the embodiment of the present invention when viewed from a II-II position in FIG.1 is shown in FIG.2.

As shown in FIG.2, the optical disk device 10 according to the embodiment of the present invention includes a main body 13 for storing a plurality of optical disks 12 therein, and a plurality of trays 20 stacked to hold each optical disk 12 individually in the inside of the main body 13. A holding portion 21 for holding each optical disk 12 is provided to each tray 20. Retaining detents 25 provided turnably to the holding portion 21 hold the optical disk 12 from the recording face 12b side of the optical disk 12.

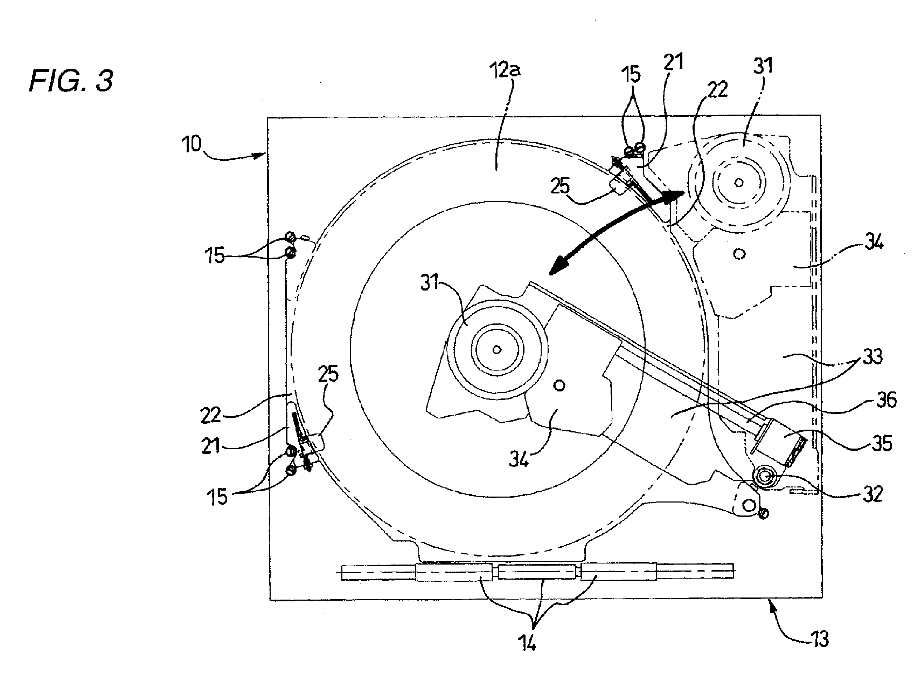

As shown in FIG.2 and FIG.3, a turning arm 30 is provided near the tray 20 (the right side in FIG.2) in the main body 13 to turn on a pivot 32. This turning arm 30 has a turntable 31, which turns while holding the optical disk 12, at its top end.

A pickup 34 having an optical head (not shown) is provided to a suspension chassis 33 of the turning arm 30 such that it can be reciprocally moved along the direction that connects the pivot 32 and a center of the turntable 31. This pickup 34 can be moved by a lead screw 36 that is rotated by a drive motor 35.

Here, a pair of carrying rollers 14 are provided vertically on the inside of the slot 11 of the main body 13. The carrying rollers 14 carries in the optical disk 12 inserted through the slot 11, and also ejects the optical disk 12 whose recording/playing is completed from the slot 11.

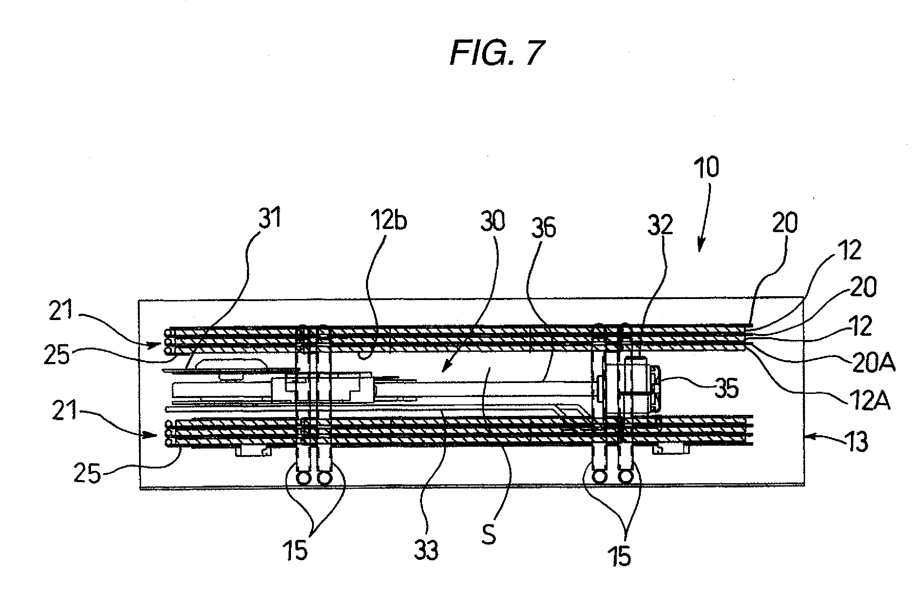

As shown in FIG.2 and FIG.3, an expanded portion 22 extended outward in the diameter direction of the optical disk 12 is provided to the outer peripheral portion. The holding portion 21 for holding the optical disk 12 to clasp it in its arm from the label face 12a side (the upper side in FIG.7) of the optical disk 12 is provided in plural locations (e.g., two locations in FIG.2) of this expanded portion 22.

Each tray 20 can be moved vertically along a shaft 16.

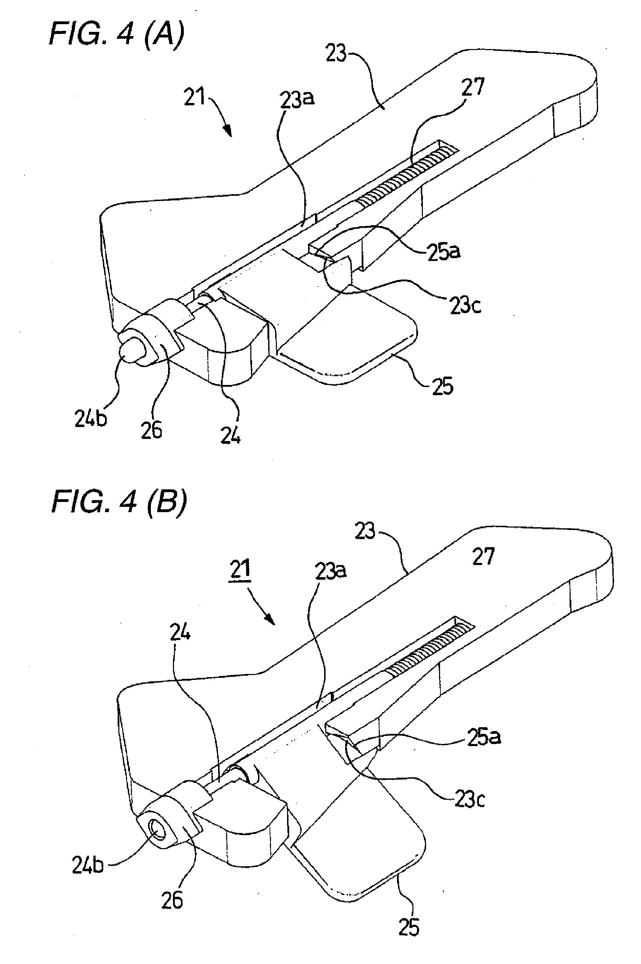

A concrete example of the holding portion 21 is shown in FIGS.4(A)(B) respectively. The holding portion 21 has a holding portion main body 23 fitted to the expanded portion 22 of the tray 20, a turning shaft 24 provided turnably to the holding portion main body 23, and a retaining detent 25 provided integrally with the turning shaft 24 to hold the optical disk 12 in the thickness direction.

That is, when the retaining detents 25 are closed (see FIG.4(A) and FIG.7), the optical disk 12 is held in the thickness direction by a cooperation of the retaining detents 25 and the tray 20.

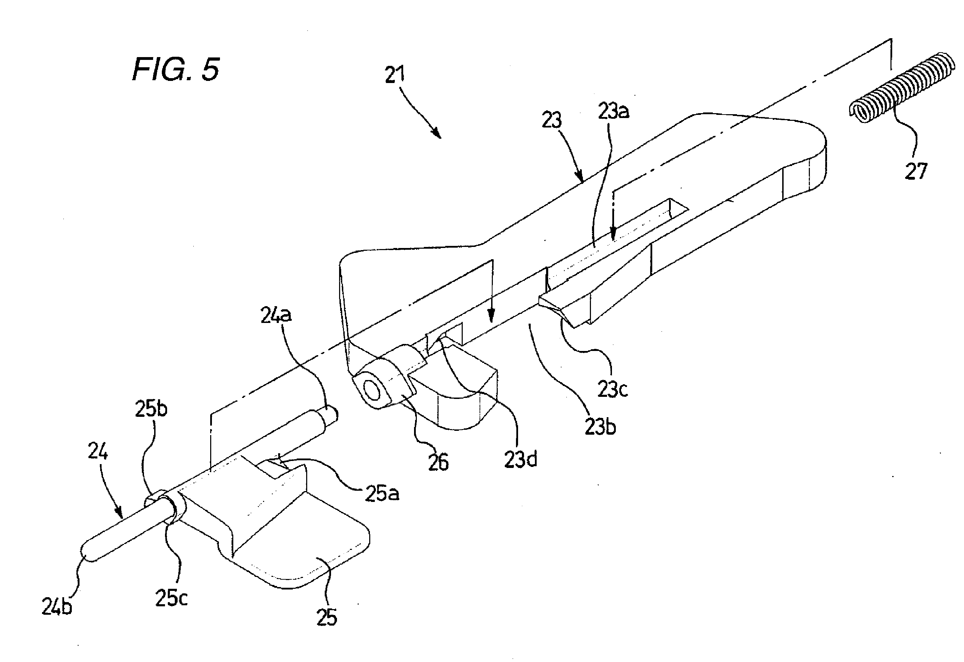

As shown in FIG.5, a turning shaft housing portion 23a for housing the turning shaft 24 is provided to the holding portion main body 23 along the longitudinal direction of the holding portion main body 23. A notch 23b for housing the retaining detent 25 is provided to be continued to a part of the turning shaft housing portion 23a. A tapered portion 23c is provided to one wall (right side in FIG.5) of the notch 23b. A similar tapered portion 25a is provided to an end portion of the retaining detent 25 opposing to this tapered portion 23c.

Also, a tapered hole 23d having a taper is formed on the other side (left side in FIG.5) of the notch 23b. A tapered projection 25b inserted into the tapered hole 23d is formed on an end portion (left side in FIG.5) of the retaining detent 25.

A bearing 26 is fitted to an opened side end portion (left side end portion in FIG.5) as one end portion of the turning shaft housing portion 23a. This bearing 26 bears the turning shaft 24, which is housed in the turning shaft housing portion 23a, turnably and movably in the longitudinal direction. Also, a spring 27 is housed in the other end portion (right side end portion in FIG.5) of the turning shaft housing portion 23a. This spring 27 always pushes the turning shaft 24 against the bearing 26 side while the end portion 24a of the turning shaft 24 is inserted into the spring 27.

In this case, a stopper portion 25c is provided to the retaining detent 25 that is provided integrally with the turning shaft 24. Therefore, even when the turning shaft 24 is pushed against the bearing 26 side by the spring 27, the turning shaft 24 is not moved leftward beyond a position shown in FIG.4(A).

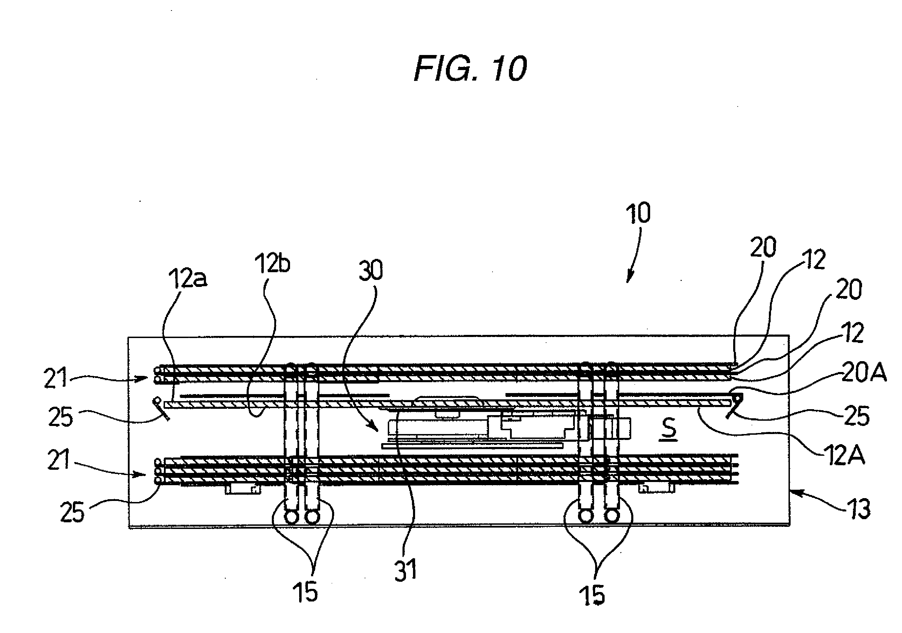

Accordingly, as shown in FIG.4(A), since the retaining detents 25 are always kept in their closed state while the turning shaft 24 is pushed leftward by the spring 27, the optical disk 12 can be held. In contrast, when an end portion 24b of the turning shaft 24 is pushed rightward in FIG.4(A), the tapered portion 25a of the retaining detent 25 is moved along the tapered portion 23c provided to the notch 23b of the holding portion main body 23. Therefore, the retaining detents 25 are turned downward in their half-opened state (state shown in FIG.4(B)), and thus the optical disk 12 can be dropped up to a middle position (see FIG.10).

Also, when a pushing force acting on the turning shaft 24 is removed in the half-opened state shown in FIG.4(B), the turning shaft 24 is moved in the left direction shown in FIG.4(B) by the pushing force of the spring 27.

As a result, the tapered projection 25c (see FIG.5) of the retaining detent 25 is moved along the taper in the tapered hole 23d provided on the holding portion main body 23 side, so that the retaining detent 25 is turned upward to return to its closed state (state in FIG.4(A)),

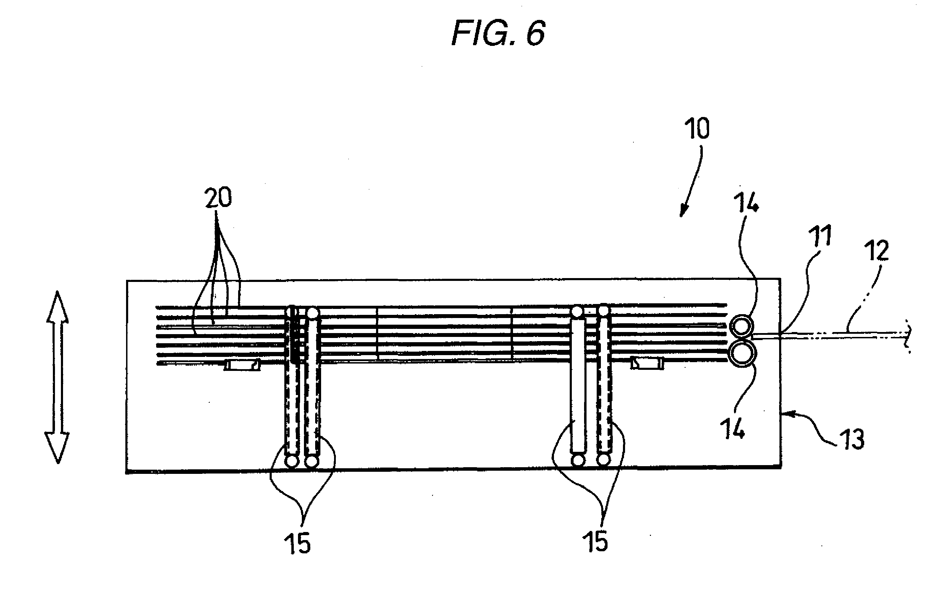

As shown in FIG.6, a plurality of trays 20 are stacked at a predetermined interval in the inside of the main body 13. Springs 15 for pushing respective trays 20 to put between them mutually are provided in plural locations (see FIG.2) on the outside of the expanded portions 22 of the trays 20.

The springs 15 are provided as a pair to the outer peripheral portion of the trays 20.

Accordingly, even when a vibration is applied from the outside, a stable operation can be ensured. Also, when an amount of warp of the optical disk 12 is large, an amount of warp can be reduced forcedly by bringing the tray 20 into contact with the optical disk. Thus, a reduction in thickness of the optical disk device 10 can be achieved.

Next, an operation of the optical disk device 10 constructed as above will be explained with reference to FIG.7 to FIG.10 hereunder.

As shown in FIG.7, each optical disk 12 is held by the retaining detents 25 of the tray 20 on the label face 12a side, i.e., the upper tray 20 in such a manner that the label face 12a is directed upward and the recording face 12b on which the information are recorded is directed downward. In this state, the retaining detents 25 are set in their closed state as shown in FIG.4(A).

Then, a desired optical disk 12A is selected and, as shown in FIG.7, a work space S is formed below the desired optical disk 12A. In this case, when respective trays 20 are positioned on the upper side, the work space S can be formed by causing the tray 20 positioned under the desired optical disk 12A to descend.

Also, when respective trays 20 are positioned on the lower side, the work space S can be formed by causing a tray 20A that holds the desired optical disk 12A and the trays 20 positioned over this tray 20A to ascend.

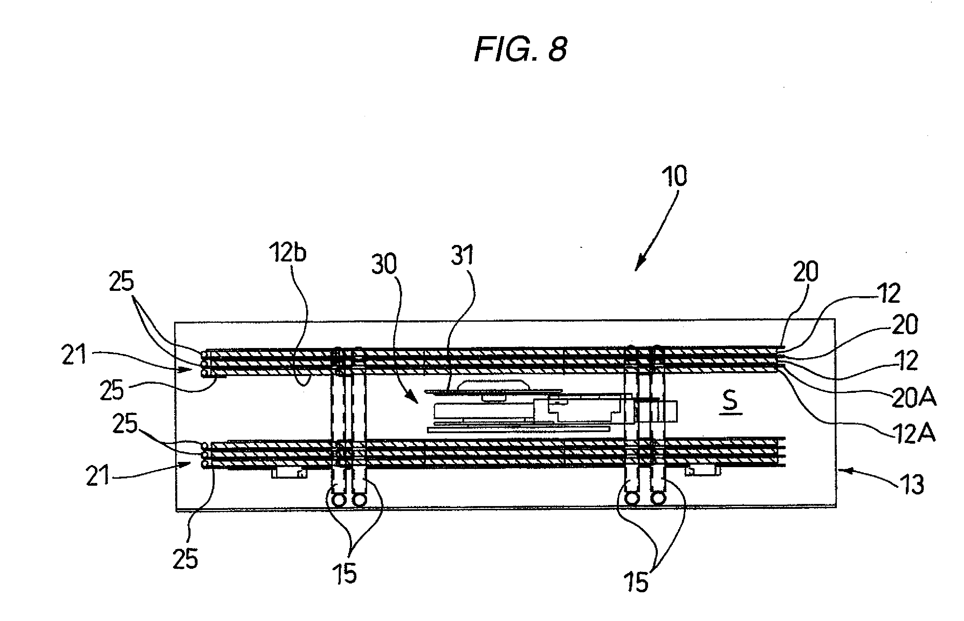

As shown in FIG.8, the turning arm 30 is moved up and down to correspond to the work space S and is turned. Thus, the turning arm 30 is positioned in a recording/playing position shown in FIG.3.

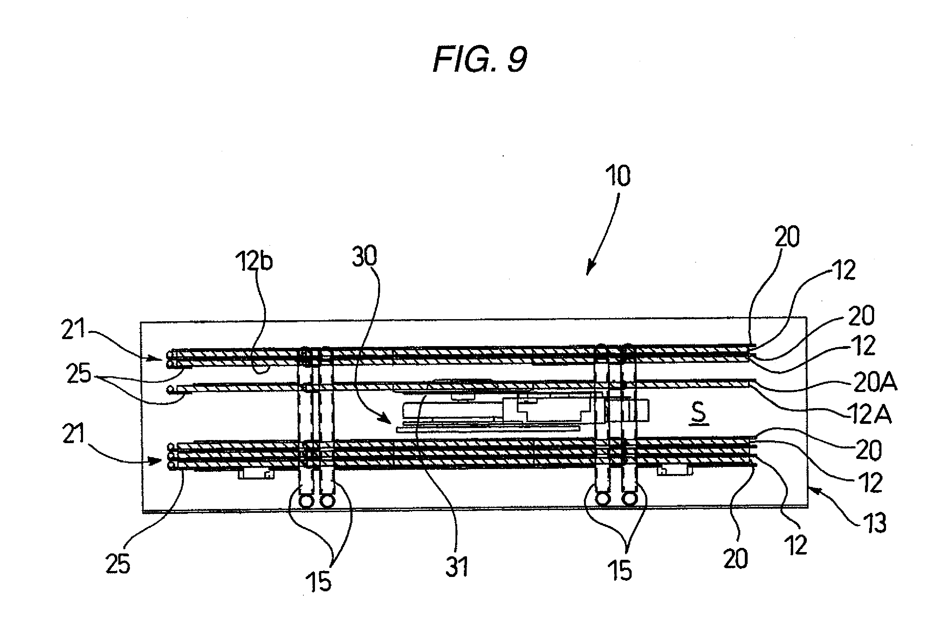

Then, as shown in FIG.9, the tray 20A which holds the desired optical disk 12A therein is caused to descend. Thus, a pushing member (not shown) pushes the turning shaft 24 of the holding portion 21, as described in FIG.4, to open the retaining detents 25 up to their half-opened state, as shown in FIG.10.

Accordingly, the desired optical disk 12A descends in the middle of the retaining detents 25 and is loaded on the turntable 31. Also, the pushing member is operated by utilizing a cam as a tray lifting portion that moves the trays 20 vertically, or the like. As a result, the pushing operation of the pushing member (i.e., the opening/closing operation of the retaining detents 25) and the vertically moving operation of the tray can be linked together, and therefore a landing operation of the optical disk 12A onto the turntable 31 can be carried out at a precise timing.

In addition, the turntable 31 clamps and turns the optical disk 12A and also moves the pickup 34 along the suspension chassis 33. Then, the recording/playing operation is applied to the optical disk 12A.

After the recording/playing operation is finished, the above-described procedures are done conversely. In other words, in FIG.10, the turntable 31 unclamped the optical disk 12A and then the retaining detents 25 are turned upward by removing the pushing force acting on the turning shaft 24 of the holding portion 21. Thus, the optical disk 12A is lifted and held, as shown in FIG.9.

As shown in FIG.8, the tray 20A is caused to ascend up to the position where the optical disk 12A does not interfere with the turntable 31. Then, as shown in FIG.7, the turning arm 30 is turned from the recording/playing position to the standby position. Then, respective trays are caused to ascend or descend to eliminate the work space S, and the optical disk 12 is returned to the stored state.

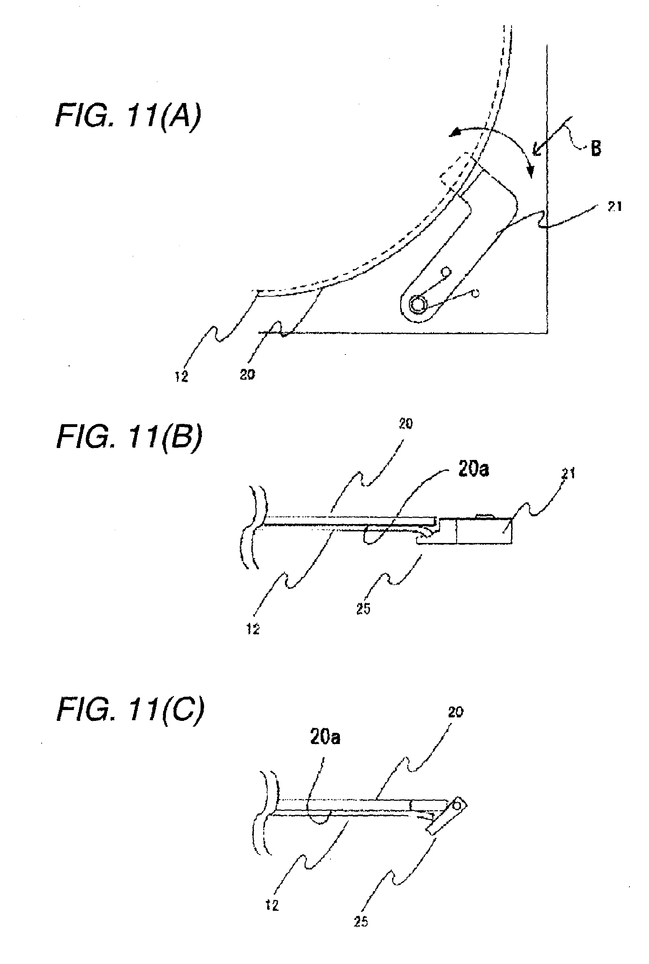

Now, as another mode of the holding portion 21, a holding portion shown in FIG.11 (A) may be considered. That is, the holding portion 21 is operated in parallel with the disk face to turn around the shaft that is extended in the direction perpendicular to the disk face of the stored optical disk 12. Thus, the optical disk 12 is put between the retaining detent 25 provided to the top end portion of the holding portion 21 and the tray 20.

In this case, as shown in FIG.11 (B), when the optical disk 12 to be stored is warped, such a situation may be considered that the turning operation of the holding portion 21 is disturbed by the warped portion of the optical disk 12 and thus the optical disk 12 cannot be held.

Therefore, as shown in FIG.11(C), it is advantageous that the holding portion 21 should be turned vertically with respect to the disk face.

As described above, according to the optical disk device 10 of the embodiment the present invention, a disk holding face 20a that makes it possible for the tray 20 to clasp the optical disk 12 from the upper side (label face 12a side) is provided by providing the retaining detents 25 that store the optical disk 12. Therefore, the recording face 12b of the optical disk 12 can be opened not to provide the notch to the tray 20, unlike the prior art. As a result, since the outer periphery of the tray 20 can be provided continuously, a rigidity of the tray 20 can be ensured.

In addition, since a deformation of the tray 20 caused due to a vibration applied from the outside, or the like can be prevented following upon the improvement that a rigidity of the tray 20 can be ensured, a holding position of the optical disk 12 can be stabilized. The event that a stabilization of the holding position of the optical disk 12 can be attained leads to such advantages that an operational error in the loading operation, the ejecting operation, the playing operation, or the like of the optical disk 12 can be prevented and also a damage of the optical disk 12 due to the deformation of the tray 20 can be prevented.

In the present embodiment, the outer periphery of the tray 20 is constructed to continue over its circumference. But no problem lies even if any notch may be provided in the middle to the extent that a rigidity of the tray 20 can be still ensured.

Also, the retaining detents 25 can be opened in their half-opened state. Therefore, unless the optical disk 12A can be loaded by any chance when such optical disk 12A is dropped and loaded on the turntable 31, it can be prevented that the optical disk 12A is dropped completely.

In the optical disk device 10 according to the above embodiment, the case where such optical disk device is built in the car audio equipment 1 equipped with the radio 2, the cassette tape player 3, and the like is explained. But the present invention can be applied similarly to the cases where the optical disk device 10 is solely employed, and others.

Also, in the optical disk device 10 according to the above embodiment, the case where the retaining detents 25 can be opened in their half-opened state is explained. But the retaining detents 25 can be opened completely.

This application is based upon Japanese Patent Application (Patent Application No.2004-242033) filed on August 23, 2004, the entire contents of which are incorporated herein by reference.

### Industrial Applicability

As described above, the optical disk device according to the present invention holds the optical disk from the label face side of the optical disk. Therefore, the recording face located on the opposite side to the label face can be opened without provision of the notch in the tray. As a result, the optical disk device possesses such an advantage that a rigidity of the tray can be secured, and is useful to the continuous playing optical disk device having a plurality of trays that store a plurality of optical disks, and the like.

## Claims

1. An optical disk device, comprising:
a main body that is adapted to stores a plurality of optical disks therein; and
a plurality of trays that are stacked to hold the optical disks respectively in an inside of the main body,
wherein the trays are respectively provided with holding portions for holding the optical disks; and
wherein the trays, in which the holding portions respectively hold the optical disks from label face sides of the optical disks, are provided with disk holding faces at the label face sides of the optical disk.

2. The optical disk device according to claim 1, further comprising:
holding portions that are adapted to contact recording faces of the optical disks which are held in the trays,
wherein the optical disks are respectively held between the trays and the holding portions.

3. The optical disk device according to claim 2, wherein each of the holding portions has retaining detent which holds each of the optical disks in a thickness direction by a cooperation with the tray in a closed state and separate the optical disk from the tray in a half-opened state.

4. The optical disk device according to claim 3, further comprising:
a tray lifting portion that lifts the trays,
wherein a lifting operation of the tray lifting portion and a separating operation of the retaining detents are linked together.
